# EUROPÄISCHE PATENTSCHRIFT

(11) **EP 0 702 445 B1**
(45) Veröffentlichungstag und Bekanntmachung des Hinweises auf die Patenterteilung: **29.12.1997**
(21) Anmeldenummer: 94114461.0
(22) Anmeldetag: 14.09.1994
(51) Int. Cl.: H02H 3/33

(54) **Fehlerstromschutzschalter mit Energiespeicherschaltung**
Fault current protective switch with energy storage circuit
Disjoncteur de protection à courants de défaut avec circuit de stockage d'énergie

(43) Veröffentlichungstag der Anmeldung: 20.03.1996
(73) Patentinhaber: SIEMENS AKTIENGESELLSCHAFT, 80333 München (DE)
(72) Erfinder: Ott, Hans, D-93053 Regensburg (DE); Bauer, Bernhard, D-93053 Regensburg (DE)

(56) Entgegenhaltungen:
- EP-A- 0 575 639
- DE-A- 3 129 277
- DE-A- 3 807 935
- DE-B- 2 856 316
- US-A- 3 736 468

## Beschreibung

Die Erfindung bezieht sich auf einen Fehlerstromschutzschalter, nachstehend FI-Schalter genannt, dessen von einem Summenstromwandler gewonnene Auslösespannung einer Auslöseeinrichtung über eine Energiespeicherschaltung zugeführt wird, im einzelnen nach Gattungsbegriff von Patentanspruch 1. Der Kondensator der Speicherschaltung, in dem die für die Auslösung der Auslöseeinrichtung erforderliche Energie gespeichert ist, nachstehend Speicherkondensator genannt, wird in seiner Ladung und Entladung durch einen Schwellwertschalter kontrolliert, der nach Erreichen des Schwellwertes den Speicherkondensator über einen Entladekreis entlädt, in dem die Auslöseeinrichtung angeordnet ist. Derartige FI-Schalter mit Speicherschaltung sind in verschiedenen Ausführungen bekannt (beispielsweise DE-A-3 129 277, EP-A-0 575 639 oder DE-A-3 807 935). Als Schwellwertschalter bzw. spannungsabhängiges Schaltorgan werden üblicherweise Zenerdioden eingesetzt, die in der Praxis eine nicht ausreichend reproduzierbare und außerdem verhältnismäßig stark temperaturabhängige Durchbruchspannung aufweisen, obwohl temperaturkompensierende Maßnahmen an sich bekannt sind (DE-A-1 589 707).

Um kleine FI-Schalter zu entwickeln, möchte man die Querschnittsflächen des Summenstromwandlers möglichst klein halten, so daß bei den weiter angestrebten kleinen Nennfehlerströmen eines FI-Schalters und bei möglichst einer Primärwindungszahl von 1, also lediglich einem durchgesteckten Leiter, der Schwellwertschalter möglichst hochohmig sein soll, um nicht als Bürde an der Sekundärwicklung zu wirken. Er soll also nicht als Entladewiderstand parallel zum Speicherkondensator wirksam werden. Mit den üblicherweise vorgesehenen beschalteten Thyristorelektroden oder mit Unijunction-Transistoren als elektronische Schwellwertschalter hat man bisher keine befriedigenden Lösungen erreicht.

Der Erfindung liegt die Aufgabe zugrunde, einen FI-Schalter zu entwickeln, der unter Vermeidung der geschilderten Schwierigkeiten für kleine Nennfehlerströme einsetzbar ist und mit kleinen Summenstromwandlern exakt arbeiten kann.

Die Lösung der geschilderten Aufgabe erfolgt durch einen Fehlerstromschutzschalter, FI-Schalter, nach Patentanspruch 1. Als Schwellwertschalter dient hierbei eine Transistorstruktur, die in Sperrrichtung betrieben ist. Das Auslöseverhalten ist in einem weiten Temperaturbereich praktisch temperaturunabhängig ist. Hierbei kann die Transistorstruktur in ihrer Basis-Emitter-Strecke aufgrund ihrer Beschaltung in Sperrrichtung und am Speicherkondensator hochohmig angeschlossen betrieben werden.

Wenn die als Schwellwertschalter dienende Transistorstruktur leitend geworden ist und die Auslöseeinrichtung versehentlich nicht angesprochen hat, ist es wünschenswert, daß der Speichervorgang und der Entladevorgang sich wiederholen. Bei einem Haltemagnetauslöser als Auslöseeinrichtung ist es günstig, die Transistorstruktur in ihrem Resthaltestrom durch die an der Haltemagnetspule auftretende Umpolspannung am Ende eines Entladevorganges des Speicherkondensators durch entsprechende Bemessung der Schaltung zu unterbrechen.

Die Erfindung soll nun anhand von in der Zeichnung grob schematisch wiedergegebenen Ausführungsbeispielen näher erläutert werden:

In FIG 1 ist der Sekundärkreis eines FI-Schalters ab Sekundärwicklung des Summenstromwandlers mit einer Transistorstruktur als Referenzelement des Schwellwertschalters wiedergegeben.

In FIG 2 ist eine andere Transistorstruktur für einen FI-Schalter nach FIG 1 dargestellt.

In FIG 3 ist eine weitere Transistorstruktur in Verbindung mit einer Schaltung nach FIG 1 wiedergegeben.

In FIG 4 ist ein Auslösediagramm mit Schwellwertspannung einer Transistorstruktur und ihre geringe Temperaturabhängigkeit veranschaulicht.

In FIG 5 ist zum Vergleich zu FIG 4 die Strom-Spannungs-Kennlinie einer konventionellen Zenerdiode und ihre Temperaturabhängigkeit veranschaulicht.

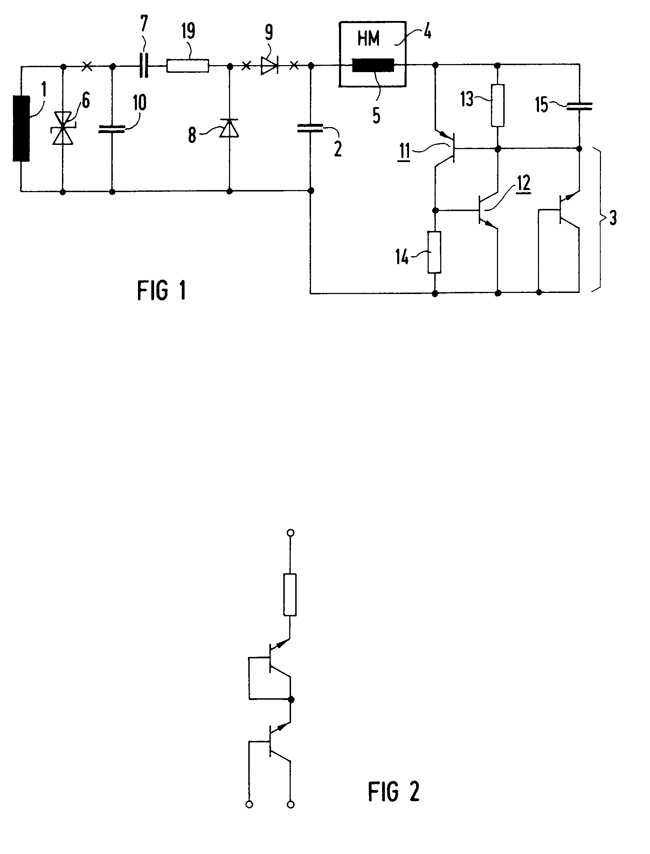

Der FI-Schalter nach FIG 1 arbeitet mit einem Summenstromwandler, an dessen Sekundärwicklung 1 ein Sekundärkreis mit einem Speicherkondensator 2, einer Transistorstruktur 3 und einer Auslöseeinrichtung 4 angeschlossen ist. Die Auslöseeinrichtung kann insbesondere als Haltemagnetvorrichtung mit einer Auslösewicklung 5 ausgeführt sein. Die Auslöseeinrichtung 4 kann in herkömmlicher Weise auf ein Schaltschloß und Schaltkontakte in zu schützenden Leitungen arbeiten. Die Transistorstruktur 3 ist aufgrund ihrer Beschaltung in Sperrrichtung betrieben. Die Transistorstruktur kann in einem Chip integriert sein.

Im Ausführungsbeispiel nach FIG 1 ist vorteilhaft parallel zur Sekundärwicklung 1 eine bidirektionale Diode 6 angeordnet, die in den Sekundärkreis gelangende transiente Spannungen auf ein für die Schaltung verträgliches Maß begrenzt bzw. kappt. Ein Kondensator 7, Dioden 8 und 9 und in gewisser Weise der Speicherkondensator 2 bilden eine Spannungsverdopplerschaltung an sich bekannter Art. Am Speicherkondensator 2 steht die verdoppelte Spannung der Sekundärwicklung 1 an. Ein Kondensator 10 kann wahlweise zur Resonanzabstimmung des Sekundärkreises auf die in der Sekundärwicklung induzierten Fehlerströme angeordnet werden, wie es an sich bekannt ist.

Die Beschaltung der Transistorstruktur 3 bilden im wesentlichen die Transistoren 11 und 12 sowie die Widerstände 13 und 14. Ein Kondensator 15 kann vorteilhaft vorgesehen sein, um Störsignale im Sekundärkreis des FI-Schalters kurzzuschließen. Die Transistoren 11 und 12 sind in einer Mitkoppelschaltung angeordnet. Die Widerstände 13 und 14 sorgen für ein hochohmiges Anschließen der Transistorstruktur 3. Hierdurch kann sich die Transistorstruktur 3 während des Ladens des Speicherkondensators 2 nicht als Bürde für den Speicherkondensator 2 auswirken. Die Transistoren 13 und 14 sind vorteilhaft mit hoher Stromverstärkung zu wählen. Wenn die Transistorstruktur 3, im Ausführungsbeispiel nach FIG 1 ein npn-Transistor, in ihrer Sperrrichtung leitend wird, sorgt der Spannungsabfall am Widerstand 13 dafür, daß der Transistor 11 in den leitenden Zustand gesteuert wird. Der dann über den Widerstand 14 fließende Strom führt zu einem Spannungsabfall, der den Transistor 12 leitend steuert. Über den Widerstand 13 wird dann ein noch größerer Strom gezogen, da der Spannungsabfall am Transistor 12 im leitenden Zustand wesentlich niedriger ist, als an der Transistorstruktur 3 im leitenden Zustand in Sperrichtung gesteuert.

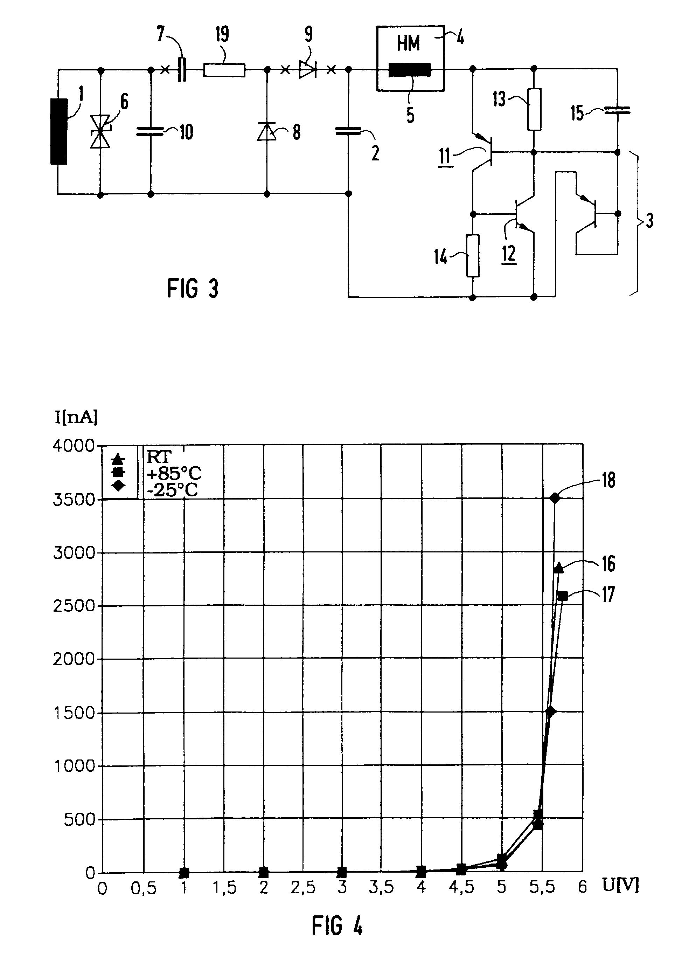

Die in Sperrichtung betriebene Transistorstruktur 3 weist in ihrem Durchbruchgebiet bei 5,5 Volt im Beispiel nach FIG 4 eine sehr steile Strom-Spannungs-Kennlinie auf und einen vernachlässigbaren Sperrstrom bis nahe an die Durchbruchsspannung. Zudem ist die Durchbruchsspannung, wie in FIG 4 veranschaulicht, weitgehend temperaturunabhängig.

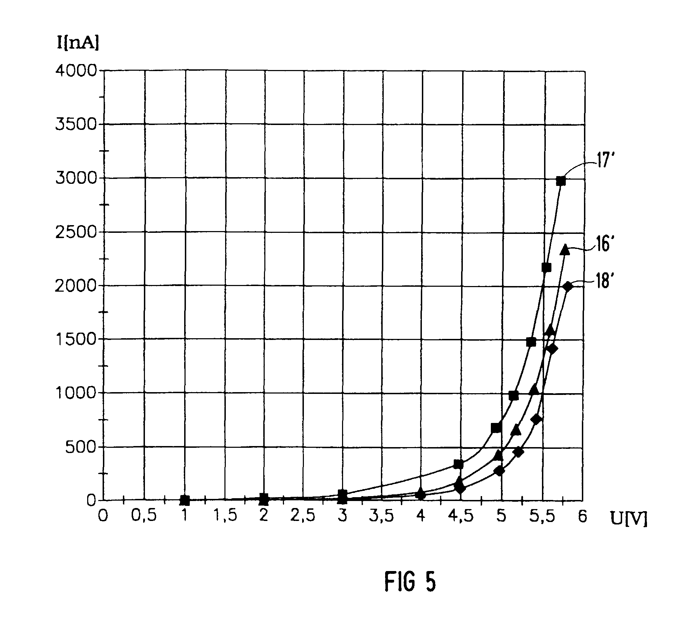

In FIG 4 ist ein Diagramm mit dem Strom-Spannungs-Verlauf einer in Sperrrichtung betriebenen Transistorstruktur beispielhaft veranschaulicht. Auf der Abszisse ist die Emitter-Basis-Spannung einer Transistorstruktur in Volt aufgetragen und auf der Ordinate der Emitter-Basisstrom in Nanoampere als Funktion der Spannung. Die Kurve 16 veranschaulicht den Verlauf des Emitterbasisstroms als Funktion der Emitterbasisspannung bei sogenannter Raumtemperatur, in der Größenordnung von + 25° C. Die Kurve 17 gibt den Verlauf für + 85° C und die Kurve 18 den Verlauf für - 25° C wieder. Dem Diagramm nach FIG 4 liegt als Transistorstruktur ein Transistor vom Typ MMBR5179LT1 und in der Dotierung als npn-Transistor zugrunde, wobei die Emitter-Basis-Sperrspannung VEBO 2,5 Volt beträgt. Vorteilhaft ist die steile Stromspannungskennlinie im Durchbruchgebiet, im Ausführungsbeispiel bei 5 bis 5,5 Volt. Sie ist auch weitgehend temperaturunabhängig. Man überwindet die sonst bei üblichen Schwellwertschaltern auftretenden Unzulänglichkeiten einer von Element zu Element, und auch in Abhängigkeit von der Betriebstemperatur, schwankenden Durchbruchsspannung. Außerdem weist der hier vorgeschlagene FI-Schalter einen bis zur Durchbruchsspannung vernachlässigbaren Sperrstrom auf. So weisen die meisten Typen herkömmlicher Art bei Raumtemperatur von + 25° C Sperrströme von einigen Mikroampere bei Sperrspannungen in der Größenordnung von 75% der Zenerspannung auf. Der Sachverhalt für einen herkömmlichen Schwellwertschalter ist in FIG 5 veranschaulicht, wobei die zu FIG 4 entsprechenden Kurven mit übereinstimmenden Bezugszeichen, jedoch mit Strich versehen, bezeichnet sind.

In FIG 2 ist eine kaskadenartige Transistorstruktur wiedergegeben, die an die Stelle der Transistorstruktur 3 nach FIG 1 eingeschaltet sein kann.

In FIG 3 ist in einer Schaltung nach Art von FIG 1 eine Transistorstruktur 3 vom pnp-Typ eingesetzt. Die Ausführungsbeispiele nach den FIG 1 bis 3 sollen hinsichtlich der Transistorstruktur 3 lediglich veranschaulichen, daß die verschiedenartigsten Strukturen möglich sind.

In den Ausführungsbeispielen nach den FIG 1 und 3 werden die mitgekoppelten Transistoren 11, 12 in ihrem Resthaltestrom durch die an der Haltemagnetspule 5 auftretende Umpolspannung am Ende eines Entladevorgangs des Speicherkondensators 2 unterbrochen. Der Resthaltestrom der mitgekoppelten Transistoren bzw. allgemein eines Schwellwertschalters mit der Transistorstruktur 3 als Referenzelement, muß hierzu unterschritten werden. Dies ist an sich besonders bei hohen Fehlerströmen problematisch, da dann der Sekundärstrom bei durchgeschaltetem Schwellwertschalter größer als der Resthaltestrom sein kann, jedoch andererseits nicht so groß, daß er für die Auslösung des Haltemagneten ausreicht. In der Schaltung nach den FIG 1 und 3 wird der Strom durch die Umpolspannung der Haltemagnetspule beim Abreißen des Entladestroms unterbrochen. Wenn dies bei bestimmten Fehlerstromformen, beispielsweise bestimmten pulsierenden Gleichfehlerströmen nicht zufriedenstellend gelingt, ist es vorteilhaft, einen zusätzlichen Widerstand 19 zum Entkoppeln von der Sekundärwicklung 1 vorzusehen. Der Widerstand 19 ist so groß zu dimensionieren, daß eine ausreichende Entkopplung von der Sekundärwicklung stattfindet, ohne daß die Ladezeit des Speicherkondensators merklich verlängert wird. Der Widerstand 19 zum Entkoppeln kann auch insbesondere an den in den FIG 1 und 3 durch Kreuzzeichen vermerkten Positionen der Schaltung alternativ eingesetzt werden.

## Patentansprüche

1. Fehlerstromschutzschalter, FI-Schalter genannt, dessen von einem Summenstromwandler gewonnene Auslösespannung einer Auslöseeinrichtung über eine Energiespeicherschaltung zugeführt wird, wobei ein Speicherkondensator (2) geladen wird, der durch einen Schwellwertschalter kontrolliert ist, der nach Erreichen des Schwellwertes den Speicherkondensator (2) über einen Entladekreis entlädt, in dem die Auslöseeinrichtung (4) angeordnet ist,
**dadurch gekennzeichnet**,
daß der Schwellwertschalter als Referenzelement eine in Sperrichtung betriebene Transistorstruktur (3) aufweist.

2. FI-Schalter nach Anspruch 1,
**dadurch gekennzeichnet**,
daß die Transistorstruktur (3) in ihrer Basis-Emitter-Strekke aufgrund ihrer Beschaltung in Sperrichtung und am Speicherkondensator (2) hochohmig angeschlossen betrieben ist.

3. FI-Schalter nach Anspruch 1 oder 2,
**dadurch gekennzeichnet**,
daß im Schwellwert-Schalter die Transistorstruktur (3) auf mitgekoppelte Transistoren (11, 12) arbeitet, die bei einem Haltemagnetauslöser als Auslöseeinrichtung (4) in ihrem Resthaltestrom durch die an der Haltemagnetspule (5) auftretende Umpolspannung am Ende eines Entladevorgangs des Speicherkondensators (2) durch entsprechende Bemessung der Schaltung unterbrochen werden.

## Claims

1. Fault-current-operated circuit-breaker, called f.c.c.b, of which the tripping voltage that is obtained from a summation current transformer is fed to a tripping device by way of an energy-storing circuit arrangement, in which a storage capacitor (2) is charged that is controlled by a threshold switch which after reaching the threshold value discharges the storage capacitor (2) by way of a discharging circuit in which the tripping device (4) is arranged,
characterised in that the threshold switch has, as a reference element, a transistor structure (3) which is operated in the reverse direction.

2. F.c.c.b. according to claim 1, characterised in that the transistor structure (3) in its base-emitter section by virtue of its interconnection is operated in the reverse direction and so as to be connected to the storage capacitor (2) in a highly resistive manner.

3. F.c.c.b. according to claim 1 or 2,
characterised in that in the threshold switch the transistor structure (3) operates into transistors (11, 12.) with regenerative feedback, the residual holding current of which transistors, given a holding magnet trip as a tripping device (4), is interrupted by the polarity reversal voltage, which occurs at the holding magnet coil (5), at the end of a discharging process of the storage capacitor (2) as a result of appropriate dimensioning of the circuit arrangement.

## Revendications

1. Disjoncteur de protection à courant de défaut, appelé disjoncteur FI, dont la tension de déclenchement produite par un transformateur de courant totalisateur est transmise à un dispositif de déclenchement par l'intermédiaire d'un circuit d'accumulation d'énergie, un condensateur (2) d'accumulation étant chargé, lequel condensateur est contrôlé par un commutateur à seuil qui, une fois la valeur-seuil atteinte, décharge le condensateur (2) d'accumulation par l'intermédiaire d'un circuit de décharge dans lequel est disposé le dispositif (4) de déclenchement,
caractérisé en ce
que le commutateur à seuil présente comme élément de référence une structure (3) à transistors fonctionnant dans le sens de non-conduction.

2. Disjoncteur FI selon la revendication 1,
caractérisé en ce
que le circuit base-émetteur de la structure (3) à transistors fonctionne, du fait de son montage, dans le sens de non-conduction (3) et la structure est raccordée avec une valeur ohmique élevée au condensateur (2) d'accumulation

3. Disjoncteur FI selon la revendication 1 ou 2,
caractérisé en ce
que dans le commutateur à seuil, la structure (3) à transistors agit sur des transistors (11, 12) à rétroaction dont le courant de maintien résiduel, lorsque le dispositif (4) de déclenchement est un déclencheur à aimant de maintien, est interrompu par la tension inverse apparaissant au niveau de la bobine (5) d'aimant de maintien, à la fin d'une opération de décharge du condensateur (2) d'accumulation par un dimensionnement approprié du circuit.
